# EUROPÄISCHE PATENTSCHRIFT

(11) **EP 3 482 114 B1**
(45) Veröffentlichungstag und Bekanntmachung des Hinweises auf die Patenterteilung: **17.05.2023**
(21) Anmeldenummer: 17740335.9
(22) Anmeldetag: 05.07.2017
(51) Int. Cl.: F16L 27/08, H05H 1/42, B23Q 11/10, B05B 3/02, B05B 7/20, B05B 15/55

(54) **PULVERDREHDURCHFÜHRUNG MIT SPÜLKAMMER**
POWDER ROTARY FEEDTHROUGH HAVING A PURGE CHAMBER
PASSAGE TOURNANT DE POUDRE MUNI D'UNE CHAMBRE DE LAVAGE

(30) Priorität: 07.07.2016 DE 102016112470
(43) Veröffentlichungstag der Anmeldung: 15.05.2019
(73) Patentinhaber: Oerlikon Metco AG, Wohlen, 5610 Wohlen (CH); GAT Gesellschaft für Antriebstechnik mbH, 65366 Geisenheim (DE)
(72) Erfinder: MICHLA, Alexander, 79801 Hohentengen (DE); STÖCKLI, Martin, 5623 Boswil (CH); BOHNHEIO, Christian, 5610 Wohlen AG (CH); HOFF, Dennis, 55257 Bodenheim (DE); STEPHAN, Peter, 65610 Kesselbach (DE)
(74) Vertreter: IPS Irsch AG
(86) Internationale Anmeldenummer: PCT/EP2017/066781
(87) Internationale Veröffentlichungsnummer: WO 2018/007449

(56) Entgegenhaltungen:
- EP-A1- 0 981 000
- EP-A1- 1 999 288
- WO-A1-2009/116269
- DE-A1-102008 046 890
- JP-A- H05 133 491
- JP-A- H06 241 364
- JP-U- H 045 587
- US-A- 6 164 316
- US-A1- 2005 161 885

## Beschreibung

Die Erfindung betrifft eine Drehdurchführung von einem stehenden in ein drehendes Medium oder umgekehrt. Hindurchgeführt werden soll unter anderem ein Pulver-Gasgemisch.

Drehdurchführungen für die Hindurchführung nichtschmierenden Medien von einem stehenden in ein drehendes Maschinenteil sind bekannt. Insbesondere spielt hier das Stichwort trockenlaufsichere Drehdurchführungen eine wesentliche Rolle. Während beim Hindurchführen von schmierenden Medien eine Dichtung in Form zweier aufeinander gleitend angeordneter ebener kreisringförmiger Gleitdichtflächen auch für höhere Drehzahlen und Übertragungsdrücke bis zu 400 bar realisiert werden kann, ist dies bei nichtschmiedenden Medien nur bei geringeren Drehzahlen und Drücken möglich. Insbesondere sollten die Gleitflächen, wenn das Medium nicht ununterbrochen zugeführt werden muss, von Zeit zu Zeit in axialer Richtung auseinander bewegt werden um einen Spalt zu bilden und abkühlen zu können, wobei sich das drehende Maschinenteil mit einer gewissen Rotationsgeschwindigkeit weiterhin drehen kann. Ansonsten müssen die Gleitdichtflächen in Kontakt bleiben, was die Drehzahlen und Drücke entsprechend begrenzt. Gewisse Leckverluste lassen sich dabei nicht völlig vermeiden.

In der DE19932355 B4 werden Leckverluste dadurch reduziert, dass anstelle der ebenen Gleitflächen zylindrische axiale Zylindermantelflächen als Dichtflächen ausgebildet sind. Mit solchen Zylinderflächen lassen sich enge Dichtspalte mit weitaus größerer Fläche und Spaltlänge ohne Änderung des Radius, d. h. ohne große Radien und entsprechende Relativgeschwindigkeiten, realisieren, so dass das nicht schmierende Medium nur in geringem Umfang durch den zylindrischen Dichtspalt hindurchtreten kann.

Einen Spezialfall bildet allerdings ein sogenanntes Pulver-Gasgemisch welches beispielsweise beim thermischen Spritzen von Zylinderbuchsen und anderen Oberflächen zum Einsatz kommt. Auch ein solches Gemisch kann als nichtschmierendes Medium bezeichnet werden. Ein zylindrischer Dichtspalt kommt allerdings bei dieser Anwendung nicht in Betracht, da sich das Pulver in dem Dichtspalt festsetzen würde, was sehr schnell zum Festfressen der Drehdurchführung führen würde.

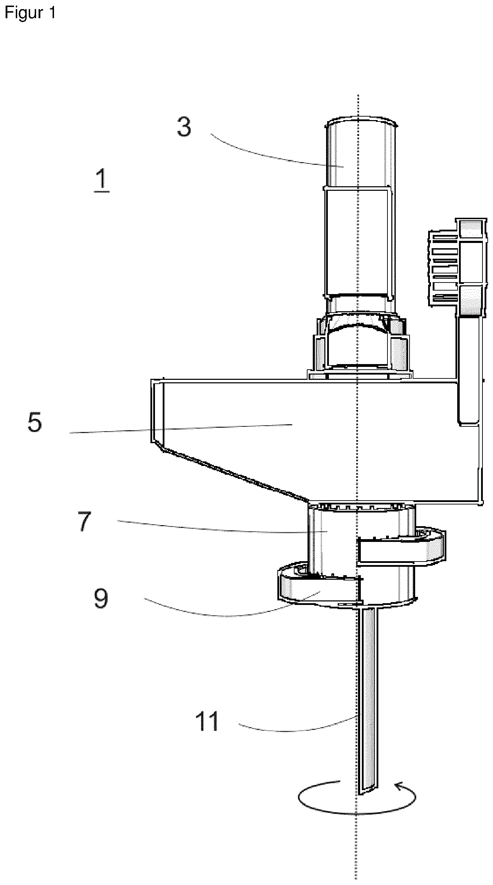

Beim thermischen Spritzen von Zylinderbuchsen muss Beschichtungspulver zuverlässig bis zu einem rotierenden Injektor transportiert werden und dementsprechend muss die Abdichtung an der Stelle der Pulverleitung garantiert werden, an der sich die Schnittstelle von "starrer" zu "rotierender" Pulverleitung befinden. Zur Verdeutlichung der Anwendung zeigt Figur 1 den Brennermanipulator RotaPlasma einer der Anmelderinnen. Gezeigt ist der der Brennermanipulator 1 umfassend eine Pulverdrehdurchführung 3, Mittel zur Stromübertragung 5, eine Brennerhalterung 7, einen Brenneranschluss 9 und schliesslich den Brenner 11.

Eine Abdichtung an dieser Schnittstelle ist von essenzieller Wichtigkeit für den Beschichtungs-prozess, da das Pulver am Ende der Pulverleitung mit Hilfe eines speziellen Pulverinjektors unter konstanten Bedingungen in eine Plasmaflamme injiziert werden sollen. Bei den konstanten Bedingungen wird besonderes Augenmerk auf die Parameter Pulvergeschwindigkeit und Pulvermenge gelegt. Diese Grössen werden insbesondere durch Undichtheiten in der Pulverlinie negativ beeinflusst. Eine Pulverleckage, zum Beispiel im Bereich der Pulverdrehdurchführung, verursacht Druckvarianzen die zum Pulsieren des Pulvers führen. Zusätzlich kann durch eine undichte Stelle in der Pulverlinie das Pulver aufgrund des leichten Überdrucks in der Pulverleitung nach aussen entweichen und damit die zum Injektor transportierte Pulvermenge stark reduzieren. Der Überdruck innerhalb der Pulverleitung beträgt je nach Parameter 100 bis 800 mbar.

Gemäss Stand der Technik kommt für die Pulverdrehdurchführungen eine Kombination Teflonbuchse-Dichtungsring zum Einsatz. Dies war bisher möglich, weil gemäss Stand der Technik der der Brenner einer solchen Vorrichtung mit bis knapp unter 200 Umdrehungen pro Minute rotiert wird. Bei 200U/min zeigt die Vorrichtung allerdings bereits eine sehr begrenzte Lebensdauer, so dass dieses Verfahren nicht wirtschaftlich betrieben werden kann. Ziel wäre es auch, die Vorrichtung bei Drehzahlen von bis zu 800U/min und vorzugsweise mehr betreiben zu können. In Kombination mit einer an die erhöhte Drehzahl adaptierten erhöhten Förderrate kann man dann, wie in einer bereits anhängigen Patentanmeldung einer der Anmelderinnen offenbart, Schichten mit deutlich verbesserter Qualität herstellen. Kurzzeitig lassen sich zwar solche hohen Drehzahlen auch mit herkömmlichen Vorrichtungen erreichen. Möchte man aber Schichten über den Labormassstab hinaus herstellen, so bedarf es einer neuen Variante der Pulverdrehdurchführung.

Festzustellen ist, dass die Anwendung mit 800U/min und auch noch darüber weit entfernt ist von den in der DE 19932355 B4 mit nichtschmierenden Medien zu erzielenden Drehzahlen von beispielweise 20000U/min und die dort beschriebene Problematik der trockenlaufsicheren Drehdurchführung eine noch untergeordnete Rolle spielt.

Allerdings treten mit einem Pulver-Gasgemisch als Medium andere und durchaus gravierende Probleme auf. Insbesondere hat ein solches Pulver in keinem Fall nur lediglich Pulverkörner einer bestimmten Korngrösse. De Korngrösse lässt sich nach oben hin zwar sehr gut beispielsweise durch Filterung beschränken. Allerdings kann das Vorhandensein von kleineren Partikeln nur bis zu einem bestimmten Prozentsatz ausgeschlossen werden, insbesondere weil es beispielsweise durch den schnellen Transport des Pulvers zu Partikelzusammenstössen kommt welche zu Bruchstücken kleinerer Dimensionen führen.

Das hat aber zur Folge, dass es gleichgültig ist, wie klein der Spalt zwischen den beiden Dichtungsringscheiben ist, es wird immer Partikel geben, die noch kleiner sind und sich in den Spalt hineinsetzen. Einerseits entsteht dadurch Reibung. Andererseits können diese zu einer Vergrösserung des Spaltes führen, was wiederum zur Folge haben kann, dass sich nun grössere Partikel in den vergrösserten Spalt setzen können, und so weiter. Letztlich kann es zur oben geschilderten Leckage kommen. Es kann aber auch aufgrund der mit der veränderten Abdichtungsqualität zu Druckschwankungen führen, welche in Kombination mit der Rotation des Brenners zu einem pulsierenden Pulverstrom führen kann. Das alles hat zur Folge, dass es beim Auftrag der Schicht zu Schichtdickenschwankungen kommen kann, denn beide Phänomene, Pulver-Pulsieren und PulverLeckage resultieren wie bereits oben beschrieben in einem ungleichmässigen Pulverauftrag und damit einer ungleichmässigen Schichtdickenverteilung. Diese ist insbesondere bei der Innenbeschichtung von Zylinderbohrungen eines der wichtigsten Qualitätsmerkmale, da die Schicht anschliessend durch einen weiteren Prozessschritt (das Honen) Endbearbeitet wird. Eine ungleichmässige Schichtdickenverteilung verursacht unter anderem Fehlstellen an der final bearbeiteten Schichtoberfläche, verursacht durch eine ungenügend hohe Bearbeitungszugabe. Da diese final bearbeitete Oberfläche (wie z.B. in einer Zylinderbohrung) eine Dichtfläche zu einem Gegen-körper (z.B. Kolben mit Kolbenringen) darstellt, kann durch die Bildung einer solchen Fehlstelle die Dichtheit nicht mehr ausreichend garantiert werden. Tritt dieser Qualitäts-mangel z.B. bei einem Kurbelgehäuse auf, ist er mit relativ hohe Ausschuss- bzw. Nach-arbeitskosten verbunden.

Es wird insbesondere darauf hingewiesen, dass die in der DE 199 32 355 B4 geschilderte Lösung mittels abdichtenden Zylinderflächen keine Abhilfe bringt, sondern zusätzlich noch zu der Schwierigkeit führt, dass feinkörniges Pulvermaterial sich zwischen den Zylinderflächen festsetzt und aufgrund der schnellen Rotation zur extremen Abrasion und damit zur Zerstörung der Zylinderoberflächen führt.

Auch bei aufeinander gleitenden, Dichtringen mit ebenen Gleitflächen kann jedoch das Eindringen von abrasiven Staubteilchen bzw. Pulverbestandteilen in den Gleitdichtspalt nicht vollständig vermieden werden, was bei den herkömmlichen Drehdurchführungen zu dem erwähnten, sehr schnellen Verschleiß der Gleitdichtflächen führt.

Eine Durchführung für Gemische aus einer Flüssigkeit und einem "abrasivem Material", zum Polieren eines Siliziumwafers ist bereits aus der EP0981000 bekannt. Dabei offenbart die EP0981000 gleitend übereinander angeordnete Dichtflächen 30, 31 sowie einen Einlass 10b und einen Auslass 10c für Kühlwasser. Aus der US6164316A ist eine Drehdurchführung bekannt, die speziell in Hochtemperaturumgebungen, in denen Dampf, heißes Wasser und heißes Öl eingesetzt werden, zur Anwendung kommt.

Der Erfindung liegt daher die Aufgabe zugrunde, eine Drehdurchführung für die Hindurchführung eines nicht schmierenden Pulver/Gasgemisches zu schaffen, welche bei mäßig hohen Drehzahlen oberhalb von 200 U/min und bis zu 2.000 U/min nur einen geringen Verschleiß zeigt und somit wirtschaftlich verwendbar ist.

Diese Aufgabe wird gelöst durch eine Drehdurchführung mit den Merkmalen des Anspruchs 1, sowie durch ein Verfahren mit den Merkmalen des Anspruchs 8. Bevorzugte Ausführungen der Erfindung sind in den Unteransprüchen definiert. Die erfindungsgemäße Drehdurchführung zeichnet sich aus durch einen quer zu deren Achse der Gleitdichtscheiben verlaufenden Spülkanal. Dieser Kanal, der beispielsweis durch zwei diametral gegenüberliegende Öffnungen im Gehäuse der Drehdurchführung, vorzugsweise an der axialen Position der Gleitdichtscheiben, gebildet wird, ermöglicht es, ein Spülmittel quer zur Achse der Gleitdichtscheiben und außen an diesen vorbei strömen zu lassen. Der Spülmittelstrom, in einer Variante ein Luftstrom, befreit insbesondere bei einem kurzzeitigen axialen Auseinanderbewegen der Gleitdichtflächen diese Gleitscheiben von Pulverteilchen des hinduchzufördernden Mediums und verhindert dadurch den schnellen Verschleiß der Gleitdichtflächen.

Um die wie oben geschilderte extreme Abrasion zu vermeiden, ist es zweckmässig die ebenen Gleitdichtflächen in Anlage miteinander federnd vorzuspannen, so dass sich diese Gleitdichtflächen im Normalfall mit einer wohldefinierten Andruckkraft berühren. Partikelbruchstücke des Pulvers, welche dennoch zwischen die Gleitflächen gelangen, werden durch den Spülmittelstrom fortgerissen und führen dann nicht sofort zu einer solch extremen Schädigung wie oben geschildert. Generell lässt sich der Anpressdruck der Gleitdichtflächen durch die Geometrie des Transportkanals in Verbindung mit dem darin herrschenden Druck, die Geometrie auf der Außenseite der rotierenden Teile in der Spülkammer und den darin herrschenden Druck, und schließlich durch die Wahl der Anpressfeder einstellen.

Erfindungsgemäss wird durch eine um die Dichtungsflächen herum angeordnete Spülkammer ein konstanter Gasstrom (Spülgas), beispielsweise Pressluft, geleitet. Der im Betrieb vorzugsweise zur Anwendung kommende Spülgasstrom liegt bei ca. 200 l/min, der Arbeitsdruck wird bevorzugt zwischen 0.5 und 1 bar gewählt. Zusätzlich kann intermittierend ein Druckstoss von Spülgas zur Reinigung des Leckageraums erfolgen. Dies kann bevorzugt alle 30 s mit vorzugsweise max. 1 bar erfolgen

Die Spülkammer und das Spülgas haben folgenden Effekt: Pulverpartikel und oder Bruchstücke, die zwischen die beiden Dichtflächen eingedrungen sind. werden aufgrund des quer verlaufenden Spülgasstromes und der überlagerten Drehbewegung einer Dichtfläche von den Gleitdichtflächen entfernt.

Ein Teil des Pulvers kann dabei in den Förderstrom zurückgelangen, ein anderer Teil wird durch den Volumenstrom des Spülgases erfasst und aus der Spülluftkammer abtransportiert (siehe Abb. 6,7). Damit wird garantiert, dass der die Gleitdichtscheiben umgebende Raum, in dem sich der Federmechanismus befindet, der für die Anpresskraft auf die Dichtflächen zuständig ist, sich nicht allmählich nicht mit Pulver füllt und die Funktion des Mechanismus stört.

Wie geschildert kann als Spülgas Pressluft eingesetzt werden. Allerdings dringt aufgrund des oben geschilderten Reinigungsprozesses der Dichtgleitflächen eine (wenn auch sehr geringe) Menge Spülgas in den Transportkanal. Aus diesem Grund wird in einer besonders bevorzugten Ausführungsform der vorliegenden Erfindung als Spülgas das Trägergas des Pulver-Gasgemisches oder zumindest ein ähnliches Gas eingesetzt.

Die Erfindung wird nun detailliert und beispielhaft anhand der Figuren dargestellt.
Figur 1 zeigt einen Brennermanipulator
Figur 2 zeigt eine erfindungsgemässe Pulverdrehdurchführung

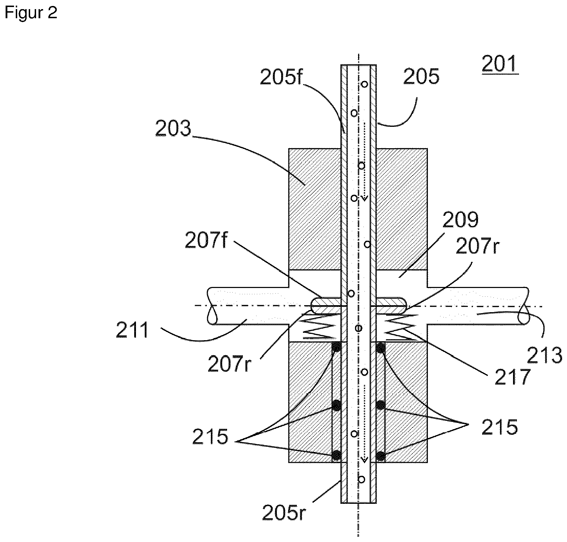

Figur 2 zeigt eine erfindungsgemässe Pulverdrehdurchführung 201, die einen in ein Gehäuse 203 eingebetteten Pulvertransportkanal 205 mit einem Pfeil mit gestrichelter Linie eingezeichneter Strömungsrichtung des Pulver-Gasgemisches umfasst. Die kleinen ungefüllten Kreise im Pulvertransportkanal sollen die Pulverpartikel schematisch darstellen. Der Pulvertransportkanal 205 umfasst einen in der Anwendung ruhenden Kanalteil 205f und einen in der Anwendung rotierenden Kanalteil 205r. Die eingezeichnete vertikale gestrichelte Linie soll die Rotationsachse darstellen, die gleichzeitig als Achse der Drehdurchführung angesehen wird.

Wird hier von rotierendem Komponenten (wie z.B. Kanalteil 205r) gesprochen, so ist im Wesentlichen rotierbar gelagert gemeint, da bei nicht verwendeter Vorrichtung die Komponente durchaus ruhen kann.

Dort wo ruhender Kanalteil 205f und rotierender Kanalteil 205r mit ihren Enden aufeinanderstossen ist am ruhenden Kanalteil 205f eine ruhende ebene kreisringförmige Gleitscheibe 207f und am rotierenden Kanalteil 205r eine weitere ruhende ebene kreisringförmige Gleitscheibe 207r vorgesehen, die aber mit dem Kanalteil 205r rotiert. Dieser Bereich des Pulvertransportkanales 205 ist erfindungsgemäss von einer Spülkammer 209 umschlossen, an die zumindest eine Gaszuführung 211 und zumindest ein Gasabzug 213 angeschlossen ist.

Dort wo der rotierende Kanal 205r im Gehäuse eingebettet ist, ist er über die Rotation zulassende Lager 215 eingebettet, wobei diese Lager 215 oder weitere Lager ebenfalls eine bezüglich der Rotationsachse axiale Bewegung zulassen. Anpressmittel 217, die zum Beispiel wie hier gezeigt als Federn ausgestaltet sind pressen die rotierende Gleitscheibe 207r gegen die ruhende Gleitscheibe 207f mit vordefiniertem Druck.

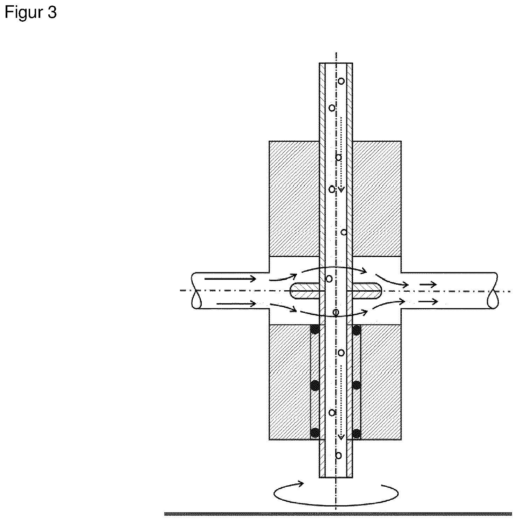

In der Anwendung wird, während durch den Pulvertransportkanal das Pulver-Gasgemisch transportiert wird, in die Spülkammer 209 Spülgas durch die Gaszuführung 211 zugeführt und durch den Gasabzug 213 wieder abgezogen. Der Spülgasstrom kann insbesondere bei einem höheren Druck zugeführt und durch die Spülkammer hindurchgeführt werden, als er im Inneren des Transportkanals herrscht. Die entsprechende Situation ist schematisch in Figur 3 dargestellt. Aus Gründen der Übersichtlichkeit wurde bei der Darstellung der Federn auf die Wiederholung der Referenzzeichen verzichtet.

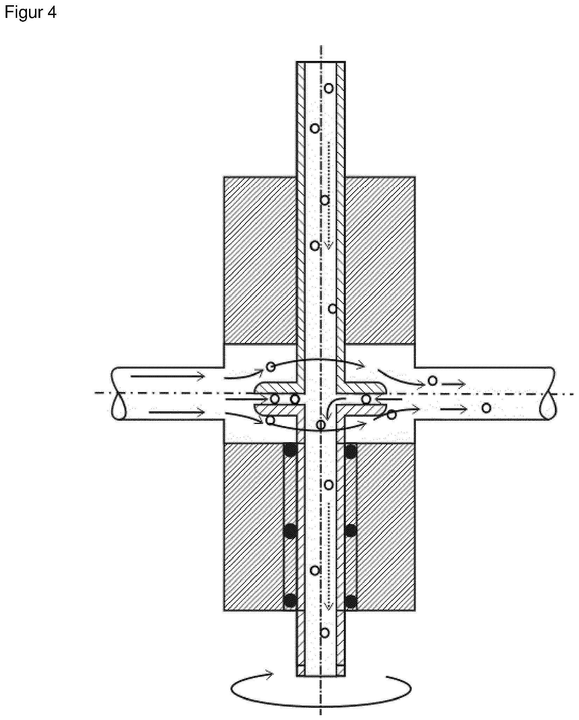

Sobald ein kleiner Spalt zwischen den beiden Dichtungsflächen entsteht und Pulver zwischen die beiden Dichtflächen dringt, wird das Pulver zusammen mit dem Spülgas in den rotierenden Kanal 205r eingesogen oder aber in die Spülkammer befördert und damit der Spalt zwischen den Gleitscheiben 207f und 207r von Pulverpartikel befreit, sodass sich im Wesentlichen aufgrund der Federkraft der Spalt wieder rasch schliesst. (Figur 4) dargestellt. Aufgrund des Überdrucks in der Spülkammer und der überlagerten Drehbewegung der Gleitscheibe 207r gelangt das Pulver bevorzugt in den Transportkanal zurück und der Spalt zwischen den Gleitscheiben 207f und 207r wird von Pulverpartikeln befreit.

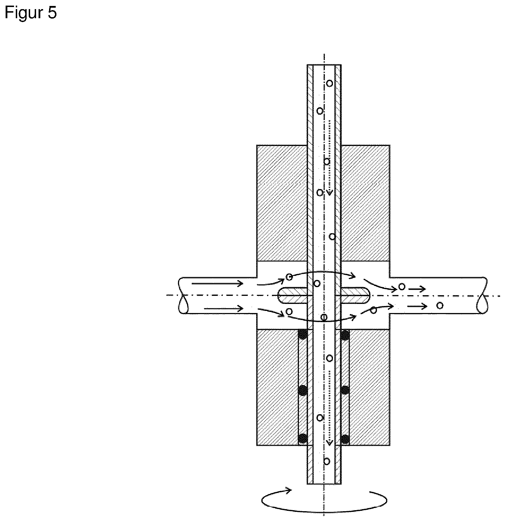

Sollten jedoch Pulverpartikel wie in Figur 5 dargestellt bis in die Spülkammer eingedrungen sein, so werden diese mit dem Spülgas aus der Spülkammer herausgespült. Das heisst die Spülkammer hat einen selbstreinigenden Mechanismus.

In einer Ausführungsform können die Gleitdichtflächen der Gleitscheiben aus Keramik oder Hartmetall bestehen.

Gemäss einer bevorzugten Ausführungsform werden die Dichtflächen der Gleitscheiben 207f und 207r mit einer Beschichtung beschichtet, welche einerseits die Reibung der Scheiben herabsetzt und andererseits vorzugsweise auch noch als Antihaftbeschichtung gegen Haftung der Pulverpartikel auf den Dichtflächen wirkt.

Die Beschichtung, die beispielsweise eine PVD Beschichtung und/oder eine CVD Beschichtung sein kann, kann beispielsweise als keramische Beschichtung oder auch als Kohlenstoffbeschichtung ausgeführt sein. Im Falle der Kohlenstoffbeschichtung kann es von Vorteil sein, zur Oberfläche der Dichtflächen, ausgehend von einer diamantähnlichen Beschichtung, einen zunehmenden sp2 hybridisierten Anteil zu realisieren. Auf diese Weise kann die Schicht den äusseren Bestandteil als Einlaufschicht umfassen, der sich in der Anwendung bis zu einer gewissen Tiefe, d.h. bis zu einem gewissen Härtegrad, abnutzt.

Generell erlaubt die Beschichtung die Verwendung von nicht keramischen, einfacher zu bearbeitenden Substratmaterialien, die für die Gleitscheiben eingesetzt werden. Durch die einfachere Bearbeitung der Materialien können wiederum engere Toleranzen realisiert werden.

Gemäss einer besonders bevorzugten Ausführung der vorliegenden Erfindung wird laufend oder regelmässig der Massenstrom des in die Spülkammer durch den Gaseinlass einströmenden Spülgases mit dem Massenstrom des aus der Spülkammer abgezogenen Gases verglichen. Ist Letzterer im Vergleich zum ersteren auch nur geringfügig reduziert, so bedeutet dies, dass sich ein Spalt gebildet hat durch den Spülgas in den Transportkanal strömt. Gegebenenfalls wird dann die durch die Federn erzeugte Vorspannung reduziert um im Spalt eingeklemmte Pulverpartikel frei zu geben und den Reinigungsprozess somit zu beschleunigen.

Die Gleitdichtflächen wurden bisher als ebene Dichtflächen beschrieben. Denkbar sind allerdings auch konische oder gewölbte Dichtflächen. In der Tat kommen grundsätzlich sämtliche rotationssymmetrische Flächen in Frage die keinen Zylindermantelanteil aufweisen. Die ebenen Dichtflächen sind allerdings zu bevorzugen, da solche dem Spülgasstrom den geringsten Widerstand entgegenbringen und somit einem effektiven Spülvorgang zuträglich sind.

Die ebenen Dichtflächen können in Anlage miteinander federnd vorgespannt sein.

Die ebenen Dichtflächen können mit einer reibungsmindernden Beschichtung, vorzugsweise mit einer PVD-Beschichtung überzogen sein. Vorzugsweise ist die Beschichtung eine Beschichtung, welche als Antihaftschicht für das Pulvermaterial ausgebildet ist.

Die Beschichtung kann eine keramische Schicht und/oder eine Kohlenstoffschicht umfassen, wobei die Kohlenstoffschicht vorzugweise im Innern eine DLC Schicht umfasst und besonders bevorzugt ausgehend von der DLC Schicht zur Oberfläche hin einen höheren sp2 hybridisierten Anteil an Kohlenstoffverbindungen umfasst.

Es wurde ein Verfahren zur Zuführung eines Pulver-Gasgemisches von einem stehenden in einen sich drehenden Maschinenteil offenbart. Vorzugsweise wird die Spülkammer mit einem Spülgas mit Überdruck im Vergleich zum im Transportkanal herrschenden Druck durchströmt, derart, dass bei Eindringen von Pulverpartikeln zwischen die Gleitflächen durch den dadurch sich bildenden Spalt eine Strömung von Spülgas in den Transportkanal stattfindet die die Pulverpartikel aus dem Spalt mit sich reisst und den Spalt damit von Pulverpartikeln reinigt.

## Patentansprüche

1. Drehdurchführung für die Hindurchführung eines Pulver-Gasgemisches von einem stehenden in ein drehendes Maschinenteil, umfassend eine Dichtung in Form zweier aufeinander gleitend angeordneter ebener kreisringförmiger Gleitscheiben (207f, 207r) mit jeweils einer Gleitdichtfläche die konzentrisch zu der Drehachse des drehenden Maschinenteils angeordnet sind und die in axialer Richtung auseinander bewegbar sind, **dadurch gekennzeichnet, dass** die Drehdurchführung (201) weiter eine Spülkammer (209) mit zumindest einem Gaseinlass (211) und zumindest einem Gasauslass (213) umfasst, und die Dichtung in der Spülkammer (209) eingebettet ist.

2. Drehdurchführung nach Anspruch 1, **dadurch gekennzeichnet, dass** der Gaseinlass (211) und der Gasauslass (213) auf diametral liegenden Seiten der Spülkammer (209) und vorzugsweise in etwa in axialer Höhe der Gleitdichtflächen angeordnet sind

3. Drehdurchführung nach Anspruch 1, **dadurch gekennzeichnet, dass** die ebenen Dichtflächen in Anlage miteinander federnd vorgespannt sind.

4. Drehdurchführung nach einem der Ansprüche 1 oder 2, **dadurch gekennzeichnet, dass** die ebenen Dichtflächen mit einer reibungsmindernden Beschichtung, vorzugsweise mit einer PVD-Beschichtung, welche mittels eines Verfahrens zur physikalischer Gasphasenabscheidung oder "Physical Vapor Deposition" (PVD) erzeugt wurde, überzogen sind.

5. Drehdurchführung nach Anspruch 4, **dadurch gekennzeichnet, dass** die Beschichtung eine Beschichtung ist, welche als Antihaftschicht für das Pulvermaterial des Pulver-Gasgemisches ausgebildet ist.

6. Drehdurchführung nach einem der vorhergehenden Ansprüche 4 oder 5, **dadurch gekennzeichnet, dass** die Beschichtung eine keramische Schicht und/oder eine Kohlenstoffschicht umfasst, wobei die Kohlenstoffschicht vorzugweise im Innern eine "Diamond like Coating" DLC-Schicht umfasst und besonders bevorzugt ausgehend von der DLC Schicht zur Oberfläche hin einen höheren sp2-hybridisierten Anteil an Kohlenstoffverbindungen umfasst.

7. Drehdurchführung nach einem der vorstehenden Ansprüche, **dadurch gekennzeichnet, dass** die Gleitdichtflächen ganz oder überwiegend aus Keramik oder Hartmetall bestehen.

8. Verfahren zur Zuführung eines Pulver-Gasgemisches von einem stehenden in einen sich drehenden Maschinenteil, **dadurch gekennzeichnet, dass** eine Drehdurchführung gemäss einem der Ansprüche 1 bis 5 verwendet wird und die Spülkammer der Drehdurchführung (201) mit einem Spülgas durchströmt wird derart, dass bei Entstehen eines Spalts zwischen den Gleitdichtflächen Pulverteilchen durch die Strömung von Spülgas aus dem Zwischenraum zwischen den Gleitdichtflächen entfernt werden.

9. Verfahren nach Anspruch 8, **dadurch gekennzeichnet, dass** das Spülgas mit Überdruck im Vergleich zum im Transportkanal herrschenden Druck durch die Spülkammer (209) hindurchströmt.

10. Verfahren nach Anspruch 8 oder 9, **dadurch gekennzeichnet, dass** bei Vorhandensein von Pulverpartikeln in der Spülkammer (209) diese mittels der Strömung des Spülgases von diesen gereinigt wird

11. Verfahren nach einem der Ansprüche 8 bis 10, **dadurch gekennzeichnet, dass** als Spülgas ein Gas verwendet wird, das ebenfalls als Trägergas der Pulver/Gas-Mischung verwendet wird.

## Claims

1. A rotary feedthrough for the feedthrough of a powder-gas mixture from a stationary machine part into a rotating machine part, comprising a seal in the form of two flat circular-ring-shaped sliding disks (207f, 207r) arranged one on the other in a sliding manner, each having a sliding seal surface, which are arranged concentric to the axis of rotation of the rotating machine part and which can be moved apart from each other in the axial direction, **characterized in that** the rotary feedthrough (201) further comprises a purge chamber (209) having at least one gas inlet (211) and at least one gas outlet (213) and that the seal is embedded in the purge chamber (209).

2. A rotary feedthrough according to claim 1, **characterized in that** the gas inlet (211) and the gas outlet (213) are arranged on diametrically lying sides of the purge chamber (209) and preferably approximately at the axial height of the sliding seal surfaces.

3. A rotary feedthrough according to claim 1, **characterized in that** the flat seal surfaces are resiliently pretensioned in contact with each another.

4. A rotary feedthrough according to anyone of the claims 1 or 2, **characterized in that** the flat seal surfaces are coated with a friction-reducing coating, preferably with a PVD coating which has been produced by means of a method for physical vapor phase deposition or "physical vapor deposition" (PVD).

5. A rotary feedthrough according to claim 4, **characterized in that** the coating is a coating which is configured as an anti-adhesion coating for the powder material of the powder-gas mixture.

6. A rotary feedthrough according to anyone of the preceding claims 4 or 5, **characterized in that** the coating comprises a ceramic layer and / or a carbon layer, wherein the carbon layer preferably comprises internally a "Diamond like Coating" DLC layer and particularly preferably, starting from the DLC layer towards the surface, comprises a higher sp² hybridized portion of carbon compounds.

7. A rotary feedthrough according to anyone of the preceding claims, **characterized in that** the sliding seal surfaces consist entirely or predominantly of ceramic or of hard metal.

8. A method for feeding a powder-gas mixture from a stationary machine part into a rotating machine part, **characterized in that** a rotary feedthrough is used according to anyone of the claims 1 to 5 and that the purge chamber of the rotary feedthrough (201) is flowed through by a purge gas in such a way that powder particles are removed from the space between the sliding seal surfaces by the flow of purge gas when a gap is formed between the sliding seal surfaces.

9. A method according to claim 8, **characterized in that** the purge gas flows through the purge chamber (209) at an overpressure compared with the pressure prevailing in the transport channel.

10. A method according to claim 8 or 9, **characterized in that** in the presence of powder particles in the purge chamber (209), the purge chamber is cleaned of these by means of the flow of the purge gas.

11. A method according to anyone of the claims 8 to 10, **characterized in that** a gas is used as purge gas, which gas is also used as carrier gas of the powder-gas mixture.

## Revendications

1. Un passage tournant pour le passage d'un mélange poudre-gaz d'une partie de machine fixe à une partie de machine tournante, comprenant un joint sous la forme de deux disques de glissement annulaires plats (207f, 207r) disposés de manière coulissante l'un sur l'autre, chacun ayant une surface d'étanchéité coulissante, qui sont concentriques à l'axe de rotation de la partie de machine tournante et qui peuvent s'écarter dans la direction axiale, **caractérisé en ce que** le passage tournant (201) comprend en outre une chambre de purge (209) avec au moins une entrée de gaz (211) et au moins une sortie de gaz (213), et le joint est encastré dans la chambre de purge (209).

2. Le passage tournant selon la revendication 1, **caractérisée en ce que** l'entrée de gaz (211) et la sortie de gaz (213) sont disposées sur des côtés diamétralement opposés de la chambre de purge (209) et de préférence à peu près à la hauteur axiale des surfaces d'étanchéité coulissantes.

3. Le passage tournant selon la revendication 1, **caractérisée en ce que** les surfaces d'étanchéité plates sont précontraintes élastiquement en appui l'une contre l'autre.

4. Le passage tournant selon l'une des revendications 1 ou 2, **caractérisé en ce que** les surfaces d'étanchéité plates sont revêtues d'un revêtement réduisant la friction, de préférence un revêtement PVD, qui a été produit par un procédé de dépôt physique en phase vapeur ou "Physical Vapor Deposition" (PVD).

5. Le passage tournant selon la revendication 4, **caractérisée en ce que** le revêtement est un revêtement qui est conçu comme une couche antiadhérente pour le matériau en poudre du mélange poudre-gaz.

6. Le passage tournant selon l'une des revendications précédentes 4 ou 5, **caractérisé en ce que** le revêtement comprend une couche de céramique et/ou une couche de carbone, dans lequel la couche de carbone comprend de préférence à l'intérieur une couche DLC "Diamond like Coating" et, particulièrement préférée, comprend, en partant de la couche DLC vers la surface, une proportion plus élevée de composés de carbone à hybridation sp2.

7. Le passage tournant selon l'une des revendications précédentes, **caractérisé en ce que** les surfaces d'étanchéité coulissantes sont entièrement ou principalement en céramique ou en métal dur.

8. Un procédé pour alimenter un mélange poudre-gaz d'une partie de machine fixe à une partie de machine tournante **caractérisé en ce qu'**un passage tournant est utilisé selon l'une des revendications 1 à 5 et la chambre de purge du passage tournant (201) est traversée par un gaz de purge de telle sorte que, en cas d'apparition d'une fente entre les surfaces d'étanchéité coulissantes, des particules de poudre sont éliminées de l'espace intermédiaire entre les surfaces d'étanchéité coulissantes par l'écoulement du gaz de purge.

9. Le procédé selon la revendication 8, **caractérisé en ce que** le gaz de purge s'écoule à travers la chambre de purge (209) avec une surpression par rapport à la pression régnant dans le canal de transport.

10. Le procédé selon la revendication 8 ou 9, **caractérisé en ce que**, en présence de particules de poudre dans la chambre de purge (209), celle-ci est nettoyée de ces particules au moyen de l'écoulement du gaz de purge.

11. Le procédé selon l'une des revendications 8 à 10, **caractérisé en ce qu'**un gaz est utilisé comme gaz de purge qui est également utilisé comme gaz porteur du mélange poudre-gaz.
